# EUROPÄISCHE PATENTANMELDUNG

(11) **EP 3 498 460 A1**
(43) Veröffentlichungstag der Anmeldung: **19.06.2019**
(21) Anmeldenummer: 18210982.7
(22) Anmeldetag: 07.12.2018
(51) Int. Cl.: B29C 65/02, B29C 65/00, B29C 65/48, B29C 65/50, B29C 70/84

(54) **FASERVERBUND-BAUTEILANORDNUNG, FASERVERBUND-BAUTEILSYSTEM UND VERFAHREN ZUM HERSTELLEN EINES FASERVERBUND-BAUTEILSYSTEMS**

(30) Priorität: 15.12.2017 DE 102017222897
(71) Anmelder: MTU Aero Engines AG, 80995 München (DE)
(72) Erfinder: Böck, Alexander, 82288 Kottgeisering (DE)

(57) **Zusammenfassung**

Die vorliegende Erfindung betrifft eine Faserverbund-Bauteilanordnung (100), umfassend ein Faserverbund-Bauteil (3), welches ein Grundmaterial und ein Fasermaterial aufweist, und eine Toleranzausgleichsschicht (5) zum Verbinden des Faserverbund-Bauteils (3) mit einem weiteren Bauteil (1), wobei die Toleranzausgleichsschicht (5) einen Faserverbund-Bereich (17) und/oder einen weiteren Schichtbereich (7) aufweist. Ferner betrifft die vorliegende Erfindung ein Faserverbund-Bauteilsystem (200), umfassend eine erfindungsgemäße Faserverbund-Bauteilanordnung (100) und einem mit der Faserverbund-Bauteilanordnung (100) verbundenen weiteren Bauteil (1) sowie ein Verfahren zum Herstellen eines Faserverbund-Bauteilsystems (200).

## Beschreibung

Die vorliegende Erfindung betrifft eine Faserverbund-Bauteilanordnung umfassend ein Faserverbund-Bauteil und eine Toleranzausgleichsschicht gemäß dem Oberbegriff des Anspruchs 1. Ferner betrifft die vorliegende Erfindung ein Faserverbund-Bauteilsystem gemäß Anspruch 10 sowie ein Verfahren zum Herstellen eines Faserverbund-Bauteilsystems nach Anspruch 14.

In der Praxis werden Faserverbundwerkstoffe für unterschiedliche Anwendungen und in verschiedenen Bereichen eingesetzt. Allerdings sind die Prozessschritte und die Produktionstechniken zum Herstellen von Bauteilen mit Faserverbundwerkstoffen noch nicht so standardisiert und ausgereift, wie dies bei anderen Werkstoffen, beispielsweise bei Metallen, Polymeren und Keramiken, der Fall ist. Faserverbund-Bauteile können, je nach der angewendeten Herstellmethode zum Verarbeiten von Faserverbundwerkstoffen, beispielsweise einseitig oder beidseitig der gefertigten Bauteile unebene Oberflächen aufweisen. Wenn diese unebenen Oberflächen in einem nachfolgenden Bearbeitungsschritt miteinander oder mit anderen mechanisch bearbeiteten Bauteilen verbunden werden sollen, können diese unebenen Oberflächen nicht flächig aneinander liegen. Dies kann, je nach Einsatzgebiet, zu Beschädigungen und/oder Undichtigkeiten des montierten Bauteils führen. Die Verbindungen können formschlüssige, kraftschlüssige und/oder materialschlüssige Verbindungen sein, wie etwa Verschraubungen oder Vernietungen. Zur Vermeidung derartiger Beschädigungen und/oder Undichtigkeiten kann es erforderlich sein, unebene Oberfläche an den Faserverbund-Bauteilen mechanisch, z. B. mittels fräsen, zu bearbeiten. Mechanische Bearbeitungen von Faserverbund-Bauteilen können jedoch zum Anschnitt von oberflächennahen Fasern führen. Diese Anschnitte können zu strukturellen Bauteilschwächungen führen.

Eine Aufgabe der vorliegenden Erfindung ist es, eine hinsichtlich der dargestellten Probleme verbesserte Faserverbund-Bauteilanordnung vorzuschlagen. Eine weitere Aufgabe der vorliegenden Erfindung ist es, ein Faserverbund-Bauteilsystem sowie ein Verfahren zum Herstellen eines Faserverbund-Bauteilsystems vorzuschlagen.

Die erfindungsgemäße Aufgabe wird durch eine Faserverbund-Bauteilanordnung mit den Merkmalen des Anspruchs 1 gelöst. Ferner wird die erfindungsgemäße Aufgabe durch ein Faserverbund-Bauteilsystem mit den Merkmalen des Anspruchs 10 sowie ein Verfahren zum Herstellen eines Faserverbund-Bauteilsystems mit den Merkmalen des Anspruchs 14 gelöst.

Erfindungsgemäß wird eine Faserverbund-Bauteilanordnung vorgeschlagen, die ein Faserverbund-Bauteil und eine Toleranzausgleichsschicht zum Verbinden des Faserverbund-Bauteils mit einem weiteren Bauteil umfasst. Das Faserverbund-Bauteil weist wenigstens ein Grundmaterial und ein Fasermaterial auf. Ferner weist die Toleranzausgleichsschicht einen Faserverbund-Bereich und einen weiteren Schichtbereich auf. Alternativ weist die Toleranzausgleichsschicht einen Faserverbund-Bereich oder einen weiteren Schichtbereich auf.

Das erfindungsgemäße Faserverbund-Bauteilsystem umfasst eine erfindungsgemäße Faserverbund-Bauteilanordnung und ein weiteren Bauteil, das mit der Faserverbund-Bauteilanordnung verbunden ist.

Das erfindungsgemäße Verfahren zum Herstellen eines erfindungsgemäßen Faserverbund-Bauteilsystems weist wenigstens die folgenden Schritte auf. Zuerst wird eine erfindungsgemäße Faserverbund-Bauteilanordnung bereitgestellt. Anschließend wird die Toleranzausgleichsschicht der Faserverbund-Bauteilanordnung bearbeitet. Diese Bearbeitung erfolgt derart, dass die Oberflächenkontur der zu verbindenden Fläche des weiteren Bauteils an die Oberfläche der Toleranzausgleichsschicht angepasst wird. Eine derartige Bearbeitung kann ein Erzeugen, beispielsweise mittels einer spanenden Bearbeitung der Oberfläche, einer im wesentlichen planaren Oberfläche der Toleranzausgleichsschicht sein, wenn die Gegenseite der Verbindung ebenfalls eine im wesentlichen planaren Oberfläche ist. Der letzte Verfahrensschritt ist ein Verbinden der Faserverbund-Bauteilanordnung mittels der angepassten Toleranzausgleichsschicht mit dem weiteren Bauteil, insbesondere mittels eines Fügeverfahrens. Ein Fügeverfahren kann ein Kleben sein oder umfassen. Optional können vor einem Klebeschritt die Oberflächen vorbehandelt werden, beispielsweise mittels eines Plasmaverfahren, um die Oberflächen von Produktionshilfsmittels, wie beispielsweise Trennmittels oder Schmiermitteln, zu säubern.

Vorteilhafte Weiterentwicklungen der vorliegenden Erfindung sind jeweils Gegenstand von Unteransprüchen und Ausführungsformen.

Erfindungsgemäße, beispielhafte Ausführungsformen können eines oder mehrere der im Folgenden genannten Merkmale in beliebiger Kombination aufweisen, sofern eine, oder die, konkrete Kombination für den Fachmann nicht als offenkundig technisch unmöglich erkennbar ist. Auch die Gegenstände der Unteransprüche geben jeweils erfindungsgemäße, beispielhafte Ausführungsformen an.

Bei allen oben gemachten und unten folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße, beispielhafte Ausführungsformen erläutern.

Wann immer hierin Alternativen mit "und/oder" eingeführt werden, so versteht der Fachmann das darin enthaltene "oder" vorzugsweise als "entweder oder" und vorzugsweise nicht als "und".

Hierin genannte Ausführungsformen sind als erfindungsgemäße, rein exemplarische Ausführungsformen der vorliegenden Erfindung zu verstehen, die nicht als beschränkend zu verstehen sind.

Ein Faserverbund-Bauteil ist insbesondere ein Bauteil, das aus einem Faserverbundwerkstoff hergestellt ist oder einen Faserverbundwerkstoff aufweist. Ein Faserverbundwerkstoff kann aus zwei Hauptkomponenten bestehen oder solche aufweisen. Optional kann der Faserverbundwerkstoff weitere Komponenten aufweisen. Die erste Hauptkomponente kann als Grundmaterial oder als Matrix oder als bettende Matrix bezeichnet werden. Die zweite Hauptkomponente kann als Fasermaterial, Fasern oder als verstärkende Fasern bezeichnet werden. Der Faserverbundwerkstoff kann als Mehrphasenwerkstoff oder als Mischwerkstoff bezeichnet werden. Der Faserverbundwerkstoff kann durch gegenseitige Wechselwirkungen der Komponenten, insbesondere der beiden Hauptkomponenten, besondere oder spezielle oder verbesserte Eigenschaften erzielen gegenüber den einzeln beteiligten Komponenten. Beispielsweise kann mittels sehr dünner Fasern im Bereich von einigen µm Durchmesser die spezifische Festigkeit des Faserverbund-Bauteils erhöht werden. Ein Faserverbundwerkstoff kann in Faserrichtung eine vielfach höhere Festigkeit gegenüber dem Grundmaterial aufweisen. Weiterhin können die Fasern im Faserverbundwerkstoff je nach der späteren Beanspruchungsrichtung ausgerichtet und in ihrer Dichte (Anzahl pro Fläche) angepasst werden. Daher können mit Hilfe entsprechender Herstellungsverfahren maßgeschneiderte Bauteile hergestellt werden. Zur Beeinflussung der Festigkeit in verschiedenen Richtungen können statt einzelner Fasern Gewebe oder Gelege verwendet werden, die vor dem Kontakt mit der Matrix hergestellt werden können.

Ein Faserverbundwerkstoff kann rein exemplarisch eine Polymermatrix, eine Metallmatrix und/oder eine Keramikmatrix aufweisen.

Eine Toleranzausgleichsschicht kann eine Schicht sein, die Unebenheiten einer Oberfläche, z. B. von gewellten Oberflächen, ausgleicht. Beispielsweise können Bauteile, insbesondere Bauteile mit Faserverbundmaterialien, aufgrund des Herstellungsprozesses Unebenheiten, Verwölbungen, Verformungen oder ähnliches aufweisen. Derartige Verformungen können durch unterschiedliche Materialien in dem Bauteil bedingt sein. Unterschiedliche Materialien können bei bestimmten Herstelltemperaturbereichen, Feuchtigkeitsbereichen etc. unterschiedliche Verformungseigenschaften, unterschiedliche Dehnverhalten etc. aufweisen und zu diesen Verformungen führen. Ein direktes mechanisches Bearbeiten des verformten Bauteils zum Ausgleichen und/oder Einebnen der Verformungen könnte sich nachteilig auf die Festigkeit des Bauteils auswirken, wenn das Bauteil einen faserverstärkten Werkstoff aufweist. Die oberflächennahen Fasern könnten durch die mechanische Bearbeitung beschädigt oder in einzelne Fasersegmente zerschnitten werden, sodass die strukturelle Integrität der festigkeitserhöhenden Faserstrukturen zumindest teilweise nicht mehr gegeben ist. Daher umfasst die erfindungsgemäße Faserverbund-Bauteilanordnung eine Toleranzausgleichsschicht, die zum Ausgleichen der Verformungen auf das Faserverbund-Bauteil aufgebracht bzw. mit diesem verbunden werden kann. Ein mechanisches Bearbeiten der Toleranzausgleichsschicht anstatt einem direkten mechanisches Bearbeiten des Faserverbund-Bauteils führt vorteilhaft nicht zu einer Verletzung oder Störung der strukturellen Integrität der darunterliegenden Faserstrukturen. Somit kann mittels eines mechanischen Bearbeitens der Toleranzausgleichsschicht das verformte Bauteil zum Verbinden des Faserverbund-Bauteils mit einem weiteren Bauteil bearbeitet werden.

Das Bearbeiten kann dabei mechanisch und/oder subtraktiv, d.h. durch Materialabtrag, z.B. durch Fräsen und/oder Schleifen, vorgenommen werden bzw. eine derartige Bearbeitung umfassen, insbesondere zur Bereitstellung einer planen Fügefläche an der bearbeiteten Toleranzausgleichsschicht.
Die Toleranzausgleichsschicht kann als Zwischenschicht bezeichnet werden.

In einigen Ausführungsformen weist die Toleranzausgleichsschicht einen Faserverbund-Bereich auf.

Ein Faserverbund-Bereich kann ein Bereich sein, der aus einem Faserverbundmaterial hergestellt ist oder ein Faserverbundmaterial aufweist. Der Faserverbund-Bereich kann das gleiche Grundmaterial wie das Grundmaterial des Faserverbund-Bauteil aufweisen. Der Faserverbund-Bereich kann alternativ ein anderes, von dem Grundmaterial des Faserverbund-Bauteils sich unterscheidendes Grundmaterial aufweisen. Der Faserverbund-Bereich kann das gleiche Fasermaterial wie das Fasermaterial des Faserverbund-Bauteil aufweisen. Der Faserverbund-Bereich kann alternativ ein anderes, von dem Fasermaterial des Faserverbund-Bauteils sich unterscheidendes Fasermaterial aufweisen.

Ein Faserverbund-Bereich kann eine Schicht, eine Lage, ein Bauteilbereich, ein Absatz oder ähnliches sein.

In einigen Ausführungsformen weist die Toleranzausgleichsschicht einen weiteren Schichtbereich auf. Der weitere Schichtbereich kann das gleiche Grundmaterial wie das Faserverbund-Bauteil und/oder das gleiche Grundmaterial wie ein optionaler Faserverbund-Bereich aufweisen. Der weitere Schichtbereich kann ein anderes Grundmaterial wie das Faserverbund-Bauteil und/oder ein anderes Grundmaterial wie der optionale Faserverbund-Bereich aufweisen. Der weitere optionale Schichtbereich kann aus einem Polymer, einem Verbundwerkstoff oder aus einem anderen Werkstoff hergestellt sein oder ein solches aufweisen.

Das Faserverbund-Bauteil und die Toleranzausgleichsschicht können zumindest abschnittsweise das gleiche Grundmaterial aufweisen. Das Grundmaterial des Faserverbund-Bauteils und der Toleranzausgleichsschicht können, zumindest abschnittsweise, integral miteinander verbunden sein. Eine integrale Bauweise kann als einstückige Bauweise bezeichnet werden. Eine integrale Bauweise basiert beispielsweise auf einem Spritzgussverfahren oder auf einem generativen Herstellungsverfahren. Alternativ kann das Grundmaterial der Toleranzausgleichsschicht mit dem Faserverbund-Bauteil verbunden sein, insbesondere kann es materialschlüssig verbunden sein, beispielsweise mittels Kleben.

Die Toleranzausgleichsschicht kann ein Fasermaterial aufweisen, welches zumindest abschnittsweise das gleiche Fasermaterial wie das Fasermaterial des Faserverbund-Bauteils ist.

Die strukturelle Einheit des Faserverbund-Bauteils und die strukturelle Einheit des Faserverbund-Bereichs der Toleranzausgleichsschicht können unterschiedlich sein. Als strukturelle Einheit des Faserverbund-Bauteils kann eine Einheit bezeichnet werden, die eine einheitliche Faserstruktur aufweist. Eine einheitliche Faserstruktur weist beispielsweise Faserausrichtungen oder Faserlagen aus Geweben oder Gesticken auf, die nicht durch einzelne Fasersegmente oder durch verkürzte oder abgeschnittene Fasern gekennzeichnet sind. Eine einheitliche Faserstruktur weist aufgrund dieser einheitlichen Faserstruktur eine hohe Festigkeit auf. Bei einer nicht einheitlichen Faserstruktur ist diese Festigkeit reduziert. Bei einer unterschiedlichen strukturellen Einheit einerseits des Faserverbund-Bauteils und andererseits des Faserverbund-Bereichs der Toleranzausgleichsschicht ist die Festigkeit der gesamten Einheit, bestehend aus dem Faserverbund-Bauteil und dem Faserverbund-Bereich der Toleranzausgleichsschicht, reduziert gegenüber einer nicht-unterschiedlichen, also einheitlichen strukturellen Einheit. Beispielsweise weist der Faserverbund-Bereich der Toleranzausgleichsschicht separate und an den Endbereichen des Faserverbund-Bereichs abgeschnittene Fasern auf, die keine Einheit mit den Fasern des Faserverbund-Bauteils bilden.

Das Faserverbund-Bauteil und die Toleranzausgleichsschicht können, zumindest abschnittsweise, integral miteinander verbunden sein.

Der weitere Schichtbereich kann eine Spritzschicht sein oder eine Spritzschicht umfassen. Eine Spritzschicht kann eine Polymerschicht oder Keramikschicht sein, die im Spritzverfahren bzw. Plasmaspritzverfahen auf eine Grundschicht oder Basisschicht aufgebracht wird. Mittels einer Spritzschicht kann eine materialschlüssige Verbindung zwischen der aufgebrachten Spritzschicht und der Grundschicht hergestellt werden. Die Grundschicht kann der Faserverbund-Bereich der Toleranzausgleichsschicht und/oder das Faserverbund-Bauteil sein.

Der weitere Schichtbereich kann mit dem Faserverbund-Bereich, zumindest abschnittsweise, stoffschlüssig verbunden sein. Alternativ oder ergänzend kann der weitere Schichtbereich mit dem Faserverbund-Bauteil, zumindest abschnittsweise, stoffschlüssig verbunden sein.

Die Dicke der Toleranzausgleichsschicht kann größer als die maximale Profiltiefe von Oberflächenunebenheiten des Faserverbund-Bauteils sein. Bei einer exemplarischen welligen Oberfläche des Faserverbund-Bauteils kann die maximale Profiltiefe als maximale Vertiefung der welligen Oberflächenform, in Richtung senkrecht zur Oberfläche betrachtet, definiert werden. Die Dicke der Toleranzausgleichsschicht kann zu einer durchgängigen, glatten und ebenen Form der Toleranzausgleichsschicht führen, ohne dass einzelne Oberflächenbereiche der Toleranzausgleichsschicht Bereiche des Faserverbund-Bauteils sind. Damit kann vorteilhaft die Toleranzausgleichsschicht bearbeitet werden, beispielsweise mittels einer Schleifbearbeitung und/oder einer Polierbearbeitung, ohne das die Faserstruktur des Faserverbund-Bauteils beschädigt bzw. gestört wird. Weiterhin wäre eine Fräsbearbeitung der Oberfläche der Toleranzausgleichsschicht möglich, vorausgesetzt, die Frästiefe erreicht oder verletzt nicht die Oberfläche des Faserverbund-Bauteils.

Rein exemplarisch kann mittels der erfindungsgemäßen Faserverbund-Bauteilanordnung eine sogenannte Präzisions-Fläche zum Fügen des Faserverbund-Bauteils mit einem weiteren Bauteil, das beispielsweise eine metallische, glatte Oberfläche aufweist, erzielt werden. Diese Präzisions-Fläche kann bezüglich der Oberflächenstruktur dicht sein, also keine Unebenheiten, Stufen, Fehlstellen, Mikrolöcher etc. aufweisen. Weiterhin kann erreicht werden, dass die Präzisions-Fläche keine inneren Spannungen beim Verspannen des Faserverbund-Bauteils mit einem weiteren Bauteil erzeugt. Diese Präzisions-Fläche kann durch eine Kombination aus einer, zumindest abschnittsweisen, integralen Herstellung eines Faserverbund-Bereichs der Toleranzausgleichsschicht mit einer anschließenden Auftragung eines weiteren, insbesondere dünnen Schichtbereichs, beispielsweise einer Spritzschicht, erreicht werden. Die Präzisions-Fläche kann durch die nachfolgend beschriebenen zwei Bearbeitungsschritte hergestellt werden. Im ersten Bearbeitungsschritt wird, insbesondere mittels eines mechanischen Bearbeitens des integralen Teils, also des Faserverbund-Bereichs der Toleranzausgleichsschicht, ein Toleranzausgleich der Unebenheiten des Faserverbund-Bauteils erreicht. Im zweiten Bearbeitungsschritt wird der insbesondere dünne weitere Schichtbereich für eine sehr hohe Maßhaltigkeit hinsichtlich der Oberflächengüte, beispielsweise hinsichtlich einer sehr glatten und ebenen Oberfläche, bearbeitet. Der zweite Bearbeitungsschritt kann ein Schleifen und Polieren umfassen. Je nach der Oberflächengüte nach dem ersten Bearbeitungsschritt ist der zweite Bearbeitungsschritt optional. Die Präzisions-Fläche kann vorteilhaft beispielsweise die tribologischen Eigenschaften der Oberfläche optimieren. Ein weiterer Vorteil kann eine Resistenzverbesserung der Oberfläche gegen eine Oxidation sein. Eine derartige Bearbeitung zum Herstellen von Präzisions-Flächen kann rein exemplarisch bei einer Faserverbund-Bauteilanordnung angewendet werden, die ein faserverstärktes Keramikkomposit (englisch: CMC, Ceramic Matrix Composites) aufweist.

Das erfindungsgemäße Faserverbund-Bauteilsystem kann eine Toleranzausgleichsschicht mit einer Fügefläche aufweisen. Die Fügefläche kann insbesondere eine mechanisch bearbeitete planare, ebene und/oder planarisierte Fügefläche sein. Die Fügefläche ist insbesondere zum Verbinden mit einem weiteren Bauteil ausgestaltet.

In einigen Ausführungsformen sind die oberflächennahen Fasern an und/oder innerhalb, d.h. mit Abstand vom Rand, der insbesondere planaren Fügefläche der Toleranzausgleichsschicht durchtrennt und/oder enden dort Fasern oder Fasersegmente. Dies kann durch eine vorangehende mechanische Bearbeitung einschließlich Materialabtragung hervorgerufen werden. Weil die Anforderungen an die Toleranzausgleichsschicht in Bezug auf Belastungen, insbesondere Zugbelastungen in Faserrichtung, im Vergleich zum darunterliegenden Bauteil erheblich geringer sein können, kann es sein, dass durchtrennte Fasern bei der Toleranzausgleichsschicht - anders als beim darunterliegenden Bauteil - unbedenklich sein können.

Das erfindungsgemäße Faserverbund-Bauteilsystem kann eine Faserverbund-Bauteilanordnung und/oder ein weiteres Bauteil mit einem bereichsweisen Überlappungsabschnitt aufweisen. Beispielsweise kann ein Endabschnitt, eine Kante oder ein anderer Bereich eines Faserverbund-Bauteils und/oder eines weiteren Bauteils einen Überlappungsabschnitt zum Verbinden dieser beiden Bauteile aufweisen. Der Überlappungsabschnitt kann beispielsweise für ein stoffschlüssiges Verbinden verwendet werden. Beispielsweise zum Kleben kann der Überlappungsbereich oberflächenvorbehandelt werden, um eine sichere und feste Klebeverbindung herzustellen.

Das erfindungsgemäße Faserverbund-Bauteilsystem kann ein weiteres Bauteil aufweisen, das im Bereich der Fügefläche aus einem metallischen Werkstoff hergestellt ist oder einen solchen aufweist.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils stark schematisch vereinfachten Figuren gilt:
- **Fig. 1**: zeigt ein erfindungsgemäßes Faserverbund-Bauteilsystem mit einer erfindungsgemäßen Faserverbund-Bauteilanordnung und einem verbundenen Flansch in einer Schnittdarstellung;
- **Fig. 2**: zeigt eine erfindungsgemäße Faserverbund-Bauteilanordnung mit einer Toleranzausgleichsschicht vor und nach einer mechanischen Bearbeitung in einer Schnittdarstellung; und
- **Fig. 3**: zeigt eine erfindungsgemäße Faserverbund-Bauteilanordnung mit einer Toleranzausgleichsschicht, die einen Faserverbund-Bereich und einen weiteren Schichtbereich umfasst, in einer Schnittdarstellung.

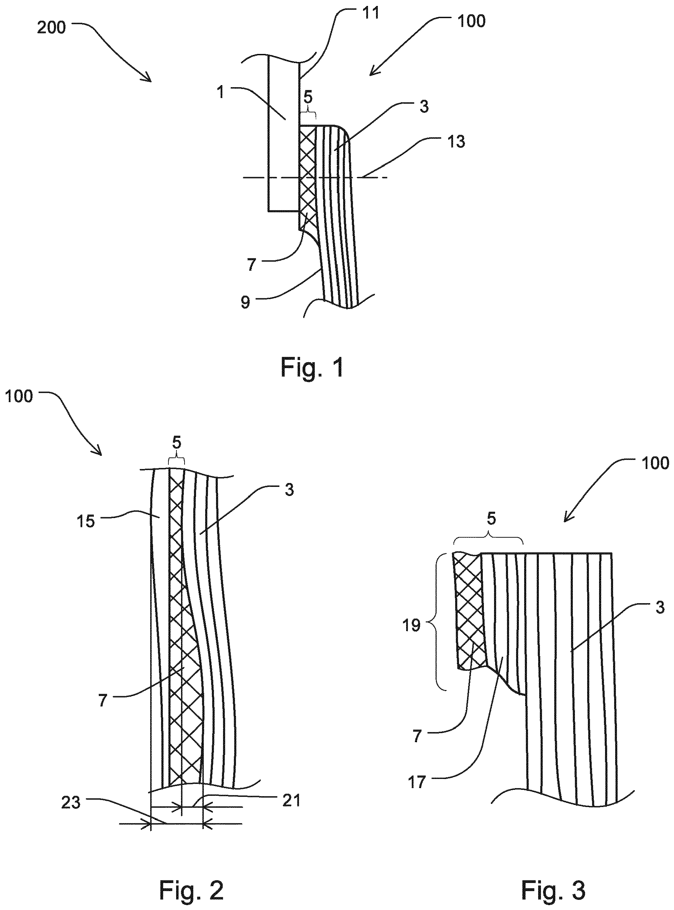

**Fig. 1** zeigt ein erfindungsgemäßes Faserverbund-Bauteilsystem 200 mit einer erfindungsgemäßen Faserverbund-Bauteilanordnung 100 und einem verbundenen Flansch 1 in einer Schnittdarstellung. Der Flansch 1 kann als weiteres Bauteil bezeichnet werden.

Die Faserverbund-Bauteilanordnung 100 umfasst ein Faserverbund-Bauteil 3 und eine Toleranzausgleichsschicht 5. Das Faserverbund-Bauteil 3 ist mit mehreren annähernd parallelen Linien dargestellt, die die einzelnen Fasern in einem Grundmaterial darstellen. Die Fasern können beispielsweise einen Einzeldurchmesser von mehreren µm aufweisen. Die Fasern können Glasfasern, Kohlenstofffasern, Keramikfasern, Aramidfasern, Borfasern, Basaltfasern, Stahlfasern, Naturfasern, Nylonfasern oder andere Fasern sein. Die Fasern können wesentlich zur Festigkeit des Faserverbund-Bauteils 3 beitragen. Das Grundmaterial kann als Grundwerkstoff oder Matrix bezeichnet werden. Als Grundmaterial werden oft Polymere verwendet, beispielsweise Duromere (weitere Bezeichnungen: Duroplast, Kunstharze), Elastomere oder Thermoplaste.

Die Toleranzausgleichsschicht 5 weist in dieser Ausführungsform einen weiteren Schichtbereich 7 auf, der die unebene Oberfläche 9 des Faserverbund-Bauteils 3 und die glatte Oberfläche 11 des Flansches 1 ausgleicht. Der weitere Schichtbereich 5 kann beispielsweise eine Spritzschicht sein. Der weitere Schichtbereich 5 kann, rein exemplarisch ein Polymer sein oder ein Polymer aufweisen. Alternativ kann der weitere Schichtbereich 5 aus einem anderen Material bestehen, ein Verbundmaterial, beispielsweise mit einem Polymer, sein. Nach einem Auftragen des weiteren Schichtbereichs 5 auf die unebene Oberfläche 9 des Faserverbund-Bauteils 3 kann in einem anschließenden Bearbeitungsschritt der weitere Schichtbereich 5 auf der Seite, die mit dem Flansch verbunden werden soll, bearbeitet werden. Diese Bearbeitung kann eine mechanische Bearbeitung mittels Fräsen, ein anderes materialabtragendes Verfahren, z. B. ein Laserabtragsverfahren, oder irgendein anderes Verfahren sein. Diesem Bearbeitungsschritt kann optional noch ein weiterer oder mehrere weitere Schritte folgen, beispielsweise zur Glättung, zum Polieren oder zum Oberflächenbehandeln. Ein Oberflächenbehandeln kann ein Plasmaverfahren sein, um einen nachfolgenden Klebeschritt vorzubereiten.

Der Flansch 1 kann an der Seite, die mit der Faserverbund-Bauteilanordnung 100 verbunden soll, gleichfalls bearbeitet sein, beispielsweise mittels Fräsen, Polieren etc.

Die Verbindung zwischen dem Flansch 1 und der Toleranzausgleichsschicht 5, die in dieser Ausführung exemplarisch als weitere Schicht 7 ausgestaltet ist, kann eine stoffschlüssige Verbindung, beispielsweise eine Klebung oder eine Schweißung, sein.

Die Verbindung zwischen dem Flansch 1 und der Faserverbund-Bauteilanordnung 100 erfolgt in dieser Ausführungsform mittels zwei Endbereichen bzw. Überlappungsbereichen der beiden genannten Bauteile. Somit ist die Toleranzausgleichsschicht 5 nur im Bereich dieser Überlappung auf das Faserverbund-Bauteil 3 aufgebracht worden.

Die Verbindung der einzelnen Bauteile ist mittels einer Verbindungslinie 13 dargestellt. Alternativ zu einer stoffschlüssigen Verbindung kann die Verbindung eine kraftschlüssige oder eine formschlüssige oder eine Kombination einer stoffschlüssigen, kraftschlüssigen und formschlüssigen Verbindung sein. Rein exemplarisch kann die Verbindung geschraubt oder genietet sein.

**Fig. 2** zeigt eine erfindungsgemäße Faserverbund-Bauteilanordnung 100 mit einer Toleranzausgleichsschicht 5 vor und nach einer, insbesondere mechanischen Bearbeitung in einer Schnittdarstellung. Vor der Bearbeitung umfasst die Toleranzausgleichsschicht 5 zusätzlich die Abtragsschicht 15, die ein unebene Oberfläche (in Fig. 2 links) aufweist. In der hier dargestellten Ausführungsform ist die Oberfläche gewellt bzw. wellenförmig. Die Abtragsschicht 15 wird mittels eines materialabtragenden Verfahrens, etwa einem Fräsverfahren, auf die endgültige Oberflächenform abgetragen. Diese endgültige Oberflächenform richtet sich nach der Oberflächenform desjenigen Bauteils, mit dem die Faserverbund-Bauteilanordnung 100 verbunden werden soll. Wenn dieses Bauteil beispielsweise eine glatte Oberfläche aufweist, kann die Form der Toleranzausgleichsschicht 5 entsprechend angepasst werden.

Die Form der Abtragsschicht 15 kann als Schichtkontur vor einer, exemplarischen mechanischen Bearbeitung bezeichnet werden.

Die wellige Form des Faserverbund-Bauteils 3 kann herstellungsbedingt sein. Ein direkter Abtrag der Oberfläche des Faserverbund-Bauteils 3, also ohne der Toleranzausgleichsschicht 5, könnte zu einer Schädigung der oberflächennahen Fasern in dem Faserverbund-Bauteil 3 führen und das Bauteil in seiner Festigkeit wesentlich schwächen.

Die maximale Profiltiefe 21 der welligen Oberfläche des Faserverbund-Bauteils 3 ist kleiner als die maximale Dicke 23 der Toleranzausgleichsschicht 5. Somit kann das Faserverbund-Bauteil 3 unbearbeitet bzw. unbeschädigt bleiben, insbesondere deren oberflächennahe Schichten mit Fasern des Faserverbundmaterials, wenn die Abtragsschicht 15 mittels einem mechanischen Abtrag bearbeitet wird.

**Fig. 3** zeigt eine erfindungsgemäße Faserverbund-Bauteilanordnung 100 mit einer Toleranzausgleichsschicht 5, die einen Faserverbund-Bereich 17 und einen weiteren Schichtbereich 7 umfasst, in einer Schnittdarstellung.

Der Faserverbund-Bereich 17 ist rein exemplarisch als integraler Bereich, der mit dem Faserverbund-Bauteil 3 eine stoffliche Einheit bildet, ausgeführt. Somit können die Fasern des Faserverbund-Bereichs 17 als auch der Werkstoff des Grundmaterials des Faserverbund-Bereichs 17 mit denen des Faserverbund-Bauteil 3 gleich sein. Die Fasern des Faserverbund-Bereichs 17, die als senkrechte, annähernd parallele Linien dargestellt sind, erstrecken sich vorzugsweise nur über den Fügebereich 19. Diese Fasern werden nicht zur strukturellen Stabilisierung der Faserverbund-Bauteilanordnung 100 außerhalb des Fügebereichs 19 benötigt. Die Fasern des Faserverbund-Bereichs 17 bilden keine strukturelle Einheit mit den Fasern des Faserverbund-Bauteils 3. Daher könnte dieser Faserverbund-Bereich 17, wenn keine weitere Schicht 7 mehr aufgetragen wäre (in Fig. 3 nicht dargestellt), mechanisch bearbeitet und zumindest teilweise abgetragen werden, ohne die strukturelle Stabilität und Festigkeit des Faserverbund-Bauteils 3 zu beeinflussen und zu schwächen. Die Fasern des Faserverbund-Bauteils 3 können sich über den Fügebereich hinaus erstrecken und beispielsweise einer gebogenen Bauteilkontur folgen bzw. diese Bauteilkontur definieren.

Der weitere Schichtbereich 7 kann eine Spritzschicht sein. Die entsprechende Beschreibung zu den Fig. 1 und 2 können analog betrachtet werden.

### Bezugszeichenliste

- 100: Faserverbund-Bauteilanordnung
- 200: Faserverbund-Bauteilsystem
- 1: Flansch; weiteres Bauteil
- 3: Faserverbund-Bauteil
- 5: Toleranzausgleichsschicht
- 7: weiterer Schichtbereich
- 9: Oberfläche; unebene Oberfläche
- 11: Oberfläche; glatte Oberfläche
- 13: Verbindungslinie
- 15: Abtragsschicht
- 17: Faserverbund-Bereich
- 19: Fügebereich; Bereich der Fügefläche
- 21: maximale Profiltiefe
- 23: Dicke der Toleranzausgleichsschicht

## Patentansprüche

1. Faserverbund-Bauteilanordnung (100), umfassend ein Faserverbund-Bauteil (3), welches ein Grundmaterial und ein Fasermaterial aufweist, und eine Toleranzausgleichsschicht (5) zum Verbinden des Faserverbund-Bauteils (3) mit einem weiteren Bauteil (1), wobei die Toleranzausgleichsschicht (5) einen Faserverbund-Bereich (17) und/oder einen weiteren Schichtbereich (7) aufweist.

2. Faserverbund-Bauteilanordnung (100) nach Anspruch 1, wobei das Faserverbund-Bauteil (3) und die Toleranzausgleichsschicht (5) zumindest abschnittsweise das gleiche Grundmaterial aufweisen.

3. Faserverbund-Bauteilanordnung (100) nach Anspruch 1 oder 2, wobei die Toleranzausgleichsschicht (5) ein Fasermaterial aufweist, welches zumindest abschnittsweise das gleiche Fasermaterial wie das Fasermaterial des Faserverbund-Bauteils (3) ist.

4. Faserverbund-Bauteilanordnung (100) nach einem der vorangegangenen Ansprüche, wobei die strukturelle Einheit des Faserverbund-Bauteils (3) und die strukturelle Einheit des Faserverbund-Bereichs (7) der Toleranzausgleichsschicht (5) unterschiedlich sind.

5. Faserverbund-Bauteilanordnung (100) nach einem der vorangegangenen Ansprüche, wobei das Faserverbund-Bauteil (3) und die Toleranzausgleichsschicht (5), zumindest abschnittsweise, integral miteinander verbunden sind.

6. Faserverbund-Bauteilanordnung (100) nach einem der vorangegangenen Ansprüche, wobei der weitere Schichtbereich (7) eine Spritzschicht ist oder eine Spritzschicht umfasst.

7. Faserverbund-Bauteilanordnung (100) nach einem der vorangegangenen Ansprüche, wobei der weitere Schichtbereich mit dem Faserverbund-Bereich (3) stoffschlüssig verbunden ist.

8. Faserverbund-Bauteilanordnung (100) nach einem der vorangegangenen Ansprüche, wobei der weitere Schichtbereich (7) mit dem Faserverbund-Bauteil (3) stoffschlüssig verbunden ist.

9. Faserverbund-Bauteilanordnung (100) nach einem der vorangegangenen Ansprüche, wobei die Dicke (23) der Toleranzausgleichsschicht (5) größer als die maximale Profiltiefe (21) von Oberflächenunebenheiten (9) des Faserverbund-Bauteils (3) ist.

10. Faserverbund-Bauteilsystem (200), umfassend eine Faserverbund-Bauteilanordnung (100) nach einem der vorangegangenen Ansprüche und einem mit der Faserverbund-Bauteilanordnung (100) verbundenen weiteren Bauteil (1).

11. Faserverbund-Bauteilsystem (200) nach dem vorangegangenen Anspruch, wobei die Toleranzausgleichsschicht (5) der Faserverbund-Bauteilanordnung (100) eine Fügefläche, insbesondere eine mechanisch bearbeitete planare oder planarisierte Fügefläche, zum Verbinden mit dem weiteren Bauteil (1) aufweist, und/oder wobei innerhalb der/einer Fügefläche der Toleranzausgleichsschicht (5) Fasern oder Fasersegmente enden.

12. Faserverbund-Bauteilsystem (200) nach dem vorangegangenen Anspruch, wobei die Faserverbund-Bauteilanordnung (100) und/oder das weitere Bauteil (1) einen bereichsweisen Überlappungsabschnitt aufweisen.

13. Faserverbund-Bauteilsystem (200) nach einem der beiden vorangegangenen Ansprüche, wobei das weitere Bauteil (1) im Bereich der Fügefläche (19) aus einem metallischen Werkstoff hergestellt ist oder einen solchen aufweist.

14. Verfahren zum Herstellen eines Faserverbund-Bauteilsystems (200) nach einem der Ansprüche 10 bis 13, mit den folgenden Schritten:
- Bereitstellen der Faserverbund-Bauteilanordnung (100) nach einem der Ansprüche 1 bis 9,
- Bearbeiten der Toleranzausgleichsschicht (5) derart, dass die Oberflächenkontur der zu verbindenden Fläche des weiteren Bauteils (1) an die Toleranzausgleichsschicht (5) angepasst wird,
- Verbinden der Faserverbund-Bauteilanordnung (100) mittels der angepassten Toleranzausgleichsschicht (5) mit dem weiteren Bauteil (1), insbesondere mittels eines Fügeverfahrens.

15. Verfahren nach Anspruch 14, bei dem das Bearbeiten der Toleranzausgleichsschicht (5) mittels Materialabtrag erfolgt und/oder zur Bereitstellung einer planen Fügefläche führt.
